# EUROPÄISCHE PATENTSCHRIFT

(11) **EP 0 214 496 B1**
(45) Veröffentlichungstag und Bekanntmachung des Hinweises auf die Patenterteilung: **03.11.1993**
(21) Anmeldenummer: 86111271.2
(22) Anmeldetag: 14.08.1986
(51) Int. Cl.: B01D 63/08, B01D 61/36

(54) **Vorrichtung zur Trennung von Gemischen mittels des Pervaporationsverfahrens**
Apparatus for separating mixtures by pervaporization
Appareil de séparation de mélanges par pervaporation

(30) Priorität: 14.08.1985 DE 3529175
(43) Veröffentlichungstag der Anmeldung: 18.03.1987
(73) Patentinhaber: Deutsche Carbone AG, 60407 Frankfurt (DE)
(72) Erfinder: Schneider, Walter, D-6901 Dossenheim (DE); Tusel, Günter F., D-6650 Homburg/Saar (DE); Brüschke, Hartmut Ernst Artur, D-6907 Nussloch (DE); van Dijk, Arnold Johannes, NL-1422 Uithoorn (NL); Schroeder, George, NL-2252 XE Voorschoten (NL); van Wijck, Frans D., NL-2353 JD Leiderdorp (NL)
(74) Vertreter: Geissler, Bernhard, Dr.

(56) Entgegenhaltungen:
- GB-A- 2 017 531
- GB-A- 2 042 417
- US-A- 3 129 145
- US-A- 3 743 097

## Beschreibung

Die Erfindung betrifft eine Vorrichtung zur Anordnung von Membranen in einem Modul und insbesondere einen Plattenmodul zur Durchführung der Trennung von Gemischen nach dem Pervaporationsverfahren.

Trennverfahren mittels Membranen werden heute in vielen Bereichen großtechnisch zur Trennung von Gemischen eingesetzt, etwa im Bereich der Meer- und Brackwasserentsalzung, der Aufbereitung von Prozeßlösungen und bei der Ultrafiltration. In anderen Bereichen wie etwa bei der Gastrennung und der Trennung organisch-flüssiger Gemische steht der Einsatz von Membranen erst an seinem Anfang. Das letztere Verfahren, die Auftrennung flüssiger organischer Gemische mittels Membranen ist als Pervaporation bekannt, es unterscheidet sich vor allem dadurch von den anderen Membranverfahren, daS ein dampfförmiges Permeat gebildet wird. Wie bei den anderen Membrantrennverfahren wird auch bei der Pervaporation das zu trennende Gemisch mit der einen Seite einer geeigneten Membran in Kontakt gebracht. Die zur Permeation und damit zur Trennung erforderlichen Differenzen in den chemischen Potentialender Komponenten der Mischung auf beiden Seiten der Membran werden bei der Pervaporation aber nicht durch eine Druckerhöhung (und damit Erhöhung der chemischen Potentiale) auf der Mischungsseite, wie bei den anderen Membranverfahren, sondern durch eine Absenkung der chemischen Potentiale auf der Permeatseite bewirkt. Dies geschieht am einfachsten dadurch, daß durch Anlegen eines Vakuums auf der Permeatseite hier die Partialdrücke aller Komponenten unter die entsprechenden Partialdrücke auf der Mischungsseite erniedrigt werden. Durch dauerndes Abpumpen der dampfförmig durch die Membran hindurchtretenden Komponenten oder durch ihre Kondensation im Vakuum wird dann dauernd eine hinreichend hohe Differenz der Partialdrücke zwischen den beiden Seiten der Membran aufrechterhalten.

Für Pervaporationsverfahren werden porenfreie Membranen eingesetzt. Allein die unterschiedlichen Permeationsraten der Komponenten der zu trennenden Mischung durch die Membran bestimmen die Trennwirkung des Pervaporationsprozesses. Zwischen den beiden Seiten der Membran herrscht kein thermodynamisches Gleichgewicht, die Selektivität und der Grad der erreichbaren Trennung wird allein durch die Transporteigenschaften der Membran bestimmt. Dadurch können auch solche Gemische, wie z.B. Azeotrope, wirksam getrennt werden, deren Trennung über thermodynamische Dampf-Flüssigkeits-Gleichgewichte nicht möglich ist.

Dem Fachmann sind unterschiedliche Pervaporationsmembranen bekannt, die in einer Vorrichtung nach der vorliegenden Erfindung zur Abtrennung von Wasser aus Gemischen mit organischen Flüssigkeiten, zur Abtrennung flüchtiger organischer Verbindungen aus wässrigen Lösungen, zur Trennung von Gemischen von organischen Komponenten oder zur Abtrennung mindestens einer flüchtigen Komponente aus einem Gemisch mit mindestens einer nichtflüchtigen Komponente eingesetzt werden können.

Aus der Literatur sind dem Fachmann Beschreibungen von Modulen bekannt, die für die Durchführung von Pervaporationsprozessen vorgeschlagen wurden (z.B. Stuckey, US-A-2 958 656; Stuckey, US-A-2 958 657; Kirkland, US-A-3 182 043; Thijsen et al., US-A-3 367 787; Martin et al., US-A-3 140 256). Module nach diesen Vorschlägen, sowie Versuche, Module, wie sie mit Erfolg für die Verfahren der umgekehrten Osmose und der Ultrafiltration benutzt werden, für Pervaporationsverfahren einzusetzen, waren jedoch nicht erfolgreich und konnten zu keinem industriellen Einsatz von Pervaporationsverfahren führen. Keiner dieser Module trägt den spezifischen Anforderungen und den Besonderheiten des Pervaporationsprozesses in ausreichendem Maße Rechnung, um wirtschaftlich eingesetzt werden zu können.

Die Anordnung von Hohlfasermembranen in einem Bündel kann bei der Pervaporation zu keinem Erfolg führen, da der Druckverlust des permeatseitigen Dampfes in den engen Innenbohrungen einer Hohlfaser zu rasch erträgliche Werte überschreitet. Berechnungen des Druckverlustes haben ergeben, daß beim Einsatz von üblichen Hohlfasern bei der Pervaporation eine Faserlänge von 20 cm nicht wesentlich überschritten werden dürfte, damit auch unter sonst günstigen Bedingungen ein Pervaporationsprozeß erfolgreich durchgeführt werden kann.

Aus den gleichen Gründen können auch die üblichen Spiralwickelmodule, bei denen das Permeat nach Durchtritt durch die Membran spiralig durch einen engen, mit einem druckfesten Material gefüllten Kanal zu einem Permeatsammelrohr fließt, nicht für die Pervaporation verwendet werden.

Aus der EP-A- 0096 340 ist hingegen ein Modul mit spiralig aufgewickelter Membran bekannt, bei dem für Rohgemisch und Permeat die Fließrichtungen und Kanäle gegenüber den konventionellen Spiralwickelmodulen vertauscht sind, so daß das Permeat nach dem Durchtritt durch die Membran längstens einen Weg von einer halben Modullänge in einem offenen Kanal bis zum Verlassen des Moduls zurücklegen muß. Ein solcher Modul läßt sich mit Erfolg für die Pervaporation einsetzen.

Ihres einfachen Aufbaues wegen und wegen der Möglichkeit, in ihnen auch kleinflächige Membranen zu verwenden, spielen Plattenmodule in der Membrantechnologie eine erhebliche Rolle. So ist aus der DE-C-3 304 956.4 ein Plattenmodul für die Pervaporation bekannt. Danach wird der Modul aus einer Aneinanderreihung von Heizungskammern, Rohgemischkammern und Permeatkammern aufgebaut. Die Beheizung jeder Rohgemischkammer soll dazu dienen, die Betriebstemperatur über den gesamten Modul konstant zu halten und Wärmeverluste durch den Pervaporationsvorgang sofort zu ersetzen. Der transmembrane Fluß einer Pervaporationsmembran verdoppelt sich einerseits etwa bei einer Temperaturerhöhung um 10 K, andererseits entzieht das verdampfende Permeat dem System und damit dem Rohgemisch Wärme. Der zusätzliche Aufwand an Material für die Heizungskammer, die verminderte Packungsdichte und die Notwendigkeit einer zusätzlichen Abdichtung der Rohgemischkammern gegenüber den Heizungskammern mit den damit verbundenen zusätzlichen Fehlerquellen und potentiellen Undichtigkeiten stehen aber in keinem Verhältnis zu der durch den etwas erhöhten mittleren Fluß eingesparten Membranfläche. Ferner wird nach der DE-C-3 304 956.4 der Permeatdampf aus den einzelnen Permeatkammern zunächst innerhalb des geschlossenen Moduls durch besondere Kanäle geführt. Hierdurch müssen entweder erhebliche permeatseitige Druckverluste in Kauf genommen werden, die die Einsatzmöglichkeiten eines derartigen Moduls stark begrenzen, oder es können nur kleine Moduleinheiten mit geringer Membranfläche und vergrößerten Permeatkanälen benutzt werden, womit erneut die globale Packungsdichte sinkt und sich die Module erheblich verteuern. Hieraus ergibt sich unmittelbar die Aufgabe der Erfindung die gemäß Patentanspruch 1 gelöst wird.

Die vorliegende Erfindung zeigt eine Ausformung und Anordnung von Rohgemischkammern und Permeatkammern sowie der Rohgemisch- und Permeatkanäle und der Membran zu einem Modul, der die Fehler früherer Vorschläge vermeidet und den spezifischen Anforderungen, die der Pervaporationsprozess an einen Modul stellt, gerecht wird. Im folgenden ist die Vorrichtung nach der vorliegenden Erfindung beschrieben und anhand der Zeichnungen erläutert.

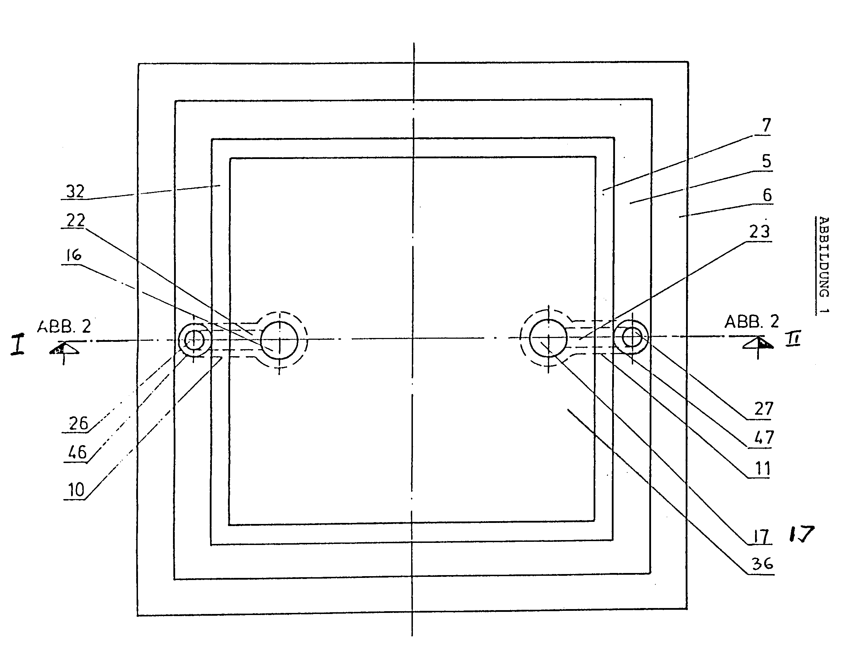

Abb. 1 zeigt die Aufsicht auf eine Platte 6, die auf ihrer einen Fläche eine umlaufende, erhabene, doppelte Profilierung mit einer höheren äußeren Stufe 5 und einer niederen inneren Stufe 7 aufweist. Auf die innere niedrigere Profilstufe 7 wird eine ebenfalls umlaufende Dichtung 32 eingelegt, auf diese, mit ihrer aktiven Trennschicht zur Platte 6 weisend, eine Membran 36. Die Platte 6 weist innerhalb der Dichtung 32 Lochungen 16, 17 auf, die sich gegenüber liegen. Auf ihrer den erhabenen Profilierungen 5, 7 abgewandten Fläche weist die Platte 6 vertiefte Kanäle 22, 23 zwischen den Lochungen 16 bzw. 17 und den Bohrungen 26 bzw. 27 auf gegenüberliegenden Seiten der Platte 6 und senkrecht zu ihrer Ebene auf. Dichtungen 10, 11 dichten die Kanäle 22, 23 nach außen hin ab, wenn zwei Platten 6 mit ihren nicht erhaben profilierten Flächen aufeinandergelegt werden, Dichtungen 46, 47 bilden nach außen abgedichtete Zu- und Abführungen 26, 27, wenn zwei Platten 6 mit ihren mit erhabenen Profilierungen versehenen Flächen aufeinandergelegt werden.

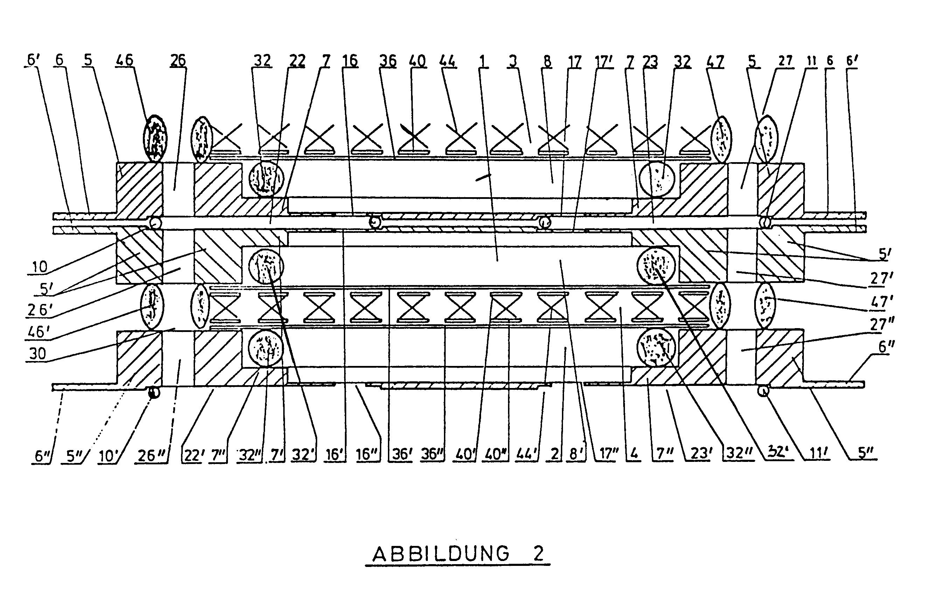

Abb. 2 zeigt einen Schnitt längs der Ebene I, II durch die Platte 6 nach der Abb. 1 und durch einen erfindungsgemäßen Aufbau eines Moduls mit Membranen.

Rohgemischkammern 1, 2 und Permeatkammern 3, 4 sind abwechselnd zu einem Modul zusammengesetzt. Die Rohgemischkammern 1, 2 werden aus Platten 6, 6', 6'' gebildet, die mit ihrer nicht erhaben profilierten Seite paarweise aufeinanderliegen. Dabei liegen die inneren Lochungen 16, 16', 16'' und 17, 17', 17'' ebenfalls paarweise aufeinander. Auf die auf der inneren Profilstufe 7, 7', 7'' aufliegenden Dichtungen 32, 32', 32'' liegen Membranen 36, 36', 36'' mit ihren aktiven Trennschichten zur jeweiligen Dichtung 32, 32' 32'' und den Platten 6, 6', 6'' weisend. Durch zwei Platten 6, 6', ihre umlaufenden Profile 7, 7' und 5, 5', die Membranen 36, 36' und abgedichtet durch die Dichtungen 32, 32' wird ein Rohgemischkammer 1 definiert, die aus zwei, durch die Lochungen 16, 16' und 17, 17' verbundenen Teilkammern 8, 8' besteht. Die Rohgemischkammer ist über die Kanäle 22, 23 mit der Zuleitung 26 und der Ableitung 27 verbunden und kann von der Rohmischung im Parallelstrom zu den anderen Rohgemischkammern eines Moduls durchströmt werden. Die Rückseiten der Membranen 36, 36', 36'' liegen auf perforierten Platten 40, 40', 40'', die durch Einrichtungen 44, 44' auf einen definierten Abstand gehalten werden und gemeinsam mit diesen die Permeatkammern 3, 4 festlegen. Die Permeatkammern 3, 4 sind an ihrer oberen und unteren Flache durch die perforierten Platten begrenzt, an zwei Seiten sind sie vollständig offen, an den Seiten, an denen sich die Zu- und Ableitungen 26, 27 für das Rohgemisch befinden, sind sie teilweise offen. Die periodische Anordnung von Rohgemischkammern und Permeatkammern entsprechend der Abb. 2 kann beliebig fortgesetzt werden. An jedem Ende eines derartigen Modulstapels befindet sich dann eine Permeatkammer, die jeweils an einer Fläche durch einen Endflansch begrenzt wird. Durch die Endflansche und zwischen ihnen befindliche Zugbolzen (auf Abb. 2 der Übersichtlichkeit wegen weggelassen)wird der gesamte Modulstapel zusammengehalten und die zur Verformung der Dichtungen und zur Abdichtung erforderliche Zugkraft aufgebracht.

Jeder Modulstapel weist eine für alle Rohgemischkammern gemeinsame Zuleitung 26 und eine gemeinsame Ableitung 27 für das Rohgemisch auf.

Zur Durchführung des Pervaporationsverfahrens wird ein Modulstapel nach der vorliegenden Erfindung, versehen mit Zu- und Ableitung für das Rohgemisch in einen evakuierbaren Behälter gebracht, in dem sich ein geeignet gekühlter Kondensator befindet, an dem sich das dampfförmige Permeat kondensiert. Durch die an den Seiten offenen Permeatkammern und durch die Anordnung des Moduls nach der vorliegenden Erfindung in einem evakuierbaren Behälter ist ein schneller Abfluß des dampfförmigen Permeates von der Membranrückseite gewährleistet.

Da der vom Permeatdampf bis zum Austritt aus dem Modul maximal zurückzulegende Weg der halben Breite einer Modulkammer entspricht, kann durch die geometrische Form der Permeat- und Rohgemischkammern und durch die Dimensionierung der die Größe der Permeatkammern definierenden Abstandsvorrichtungen für alle Betriebszustände von Pervaporationsverfahren sichergestellt werden, daß die Druckverluste zwischen der Rückseite einer Membran bis zum Austritt des Permeates aus dem Modul auf einem akzeptablen Minimum gehalten werden.

Aus dieser Beschreibung der vorliegenden Erfindung ist dem Fachmann klar, daß neben der quadratischen Form auch andere Formen für die Rohgemisch- und Permeatkammern gewählt werden können, ebenfalls kann die Anzahl der Zu- und Abführungen für das Rohgemisch sowie die Lochung der Platten und die Zahl der Kanäle zwischen zwei Platten vergrößert und wie die Zahl und Form der Profilierungen an die Erfordernisse des jeweiligen Pervaporationsprozesses angepaßt werden.

In einer bevorzugten Ausführungsform werden die die Rohgemischkammern bildenden, umlaufend profilierten Platten nicht durch den Andruck der Endflansche zusammengehalten, sondern sind paarweise durch dem Fachmann bekannte Methoden verschweißt, vernietet, verklebt oder verklammert.

In einer weiteren bevorzugten Ausführung bestehen die die Rohgemischkammern bildenden profilierten Platten sowie die die Permeatkammern begrenzenden, perforierten Platten und die Abstandshalter in den Permeatkammern aus Kunststoff. Dem Fachmann sind eine Reihe von Kunststoffen bekannt, die bei den bei einem Pervaporationsverfahren auftretenden Betriebsbedingungen (Druck, Temperatur, Angriff durch Lösungsmittel) hinreichend beständig sind.

In einer weiteren bevorzugten Ausführung bestehen die die Rohgemischkammern bildenden, umlaufend profilierten Platten sowie die die Permeatkammern begrenzenden perforierten Platten und die Abstandshalter in den Permeatkammern aus Metall. Der Fachmann kann selbst für extreme Betriebsbedingungen geeignete Metalle (z.B. Edelstahl, Titan) auswählen.

In einer weiteren bevorzugten Ausführung werden die die Rohgemischkammern bildenden, umlaufend profilierten Platten aus dünnen Metallblechen durch Tiefziehen, Pressen oder andere, dem Fachmann bekannte Methoden geformt.

In einer weiteren bevorzugten Ausführung wird als die die Permeatkammer definierende, die perforierten Platten auf Abstand haltende Vorrichtung ein Netz oder Gitter aus Metall oder Kunststoff verwendet, das in seiner Ebene einen genügend großen, freien Querschnitt für den Abfluß des Permeatdampfes aufweist.

In einer weiteren bevorzugten Ausführung weisen die die Permeatkammern begrenzenden, perforierten Platten auf ihrer der Membran abgewandten Fläche eine Profilierung auf. Die Profilierungen zweier Platten werden jeweils so aufeinander gelegt, daß zwischen ihnen freie Kanäle mit hinreichend großem Querschnitt für den Abtransport des Permeatdampfes gebildet werden. In einer weiteren bevorzugten Ausführung befinden sich mehrere Module nach der vorliegenden Erfindung gemeinsam in einem evakuierten Behälter, wobei die Zu- und Ableitungen der einzelnen Module so untereinander verbunden sind, daß die Module hintereinander oder parallel oder in jeder Kombination von Serien- und Parallelschaltung durchströmt werden. Nach dem Austritt aus einem und vor dem Eintritt in den nächsten Modul durchfließt das Rohgemisch einen direkt oder indirekt beheizten Wärmetauscher, um die bei dem Pervaporationsprozess in einem Modul verlorene Wärme wieder aufzunehmen.

In einer weiteren bevorzugten Ausführung sind die Wärmetauscher für die Aufheizung des Rohgemisches in einem Endflansch eines jeden Moduls integriert.

Aus der vorstehenden Beschreibung ergibt sich, daß der Aufbau eines Moduls nach der vorliegenden Erfindung und die Anordnung von Membranen in ihm allen spezifischen Erfordernissen eines Pervaporationsverfahrens gerecht und sich vor allem durch folgende Besonderheiten auszeichnet:
- Formung der Rohgemischkammer aus zwei Platten zwischen denen die Zu- und Abführung des Rohgemisches durch gesonderte Kanäle erfolgt.
- Auflage der Membran und der Dichtung für die Rohgemischkammer auf Profilstufen. Dadurch wird ohne zusätzliche Netze etc. ein definierter Flüssigkeitsraum auf der Rohgemischseite offen gehalten.
- Durch die Profilstufe zwischen Membran- und Dichtungsauflage ist gewährleistet, daß die Dichtung nicht über einen begrenzten Wert hinaus verformt werden kann und auch nicht durch den höheren Innendruck auf der Seite der Rohmischung gegenüber dem evakuierten Permeatraum verschoben werden kann.
- Kurze Permeatkanäle, die in ihrer Höhe durch einfache Maßnahmen an die Erfordernisse des jeweiligen Pervaporationsprozesses angepaßt werden können.
- Durch den Einbau der Module in evakuierte Gefäße können Druckverluste zwischen der Membranrückseite und der Vakuumpumpe (Kondensator) Sehr klein gehalten werden.
- Hohe Packungsdichte, einfacher Aufbau der Module und durch die Parallelschaltung der Rohgemischkammern in einem Modul nur minimaler Druckverlust auf der Seite des Rohgemisches.

## Patentansprüche

1. Vorrichtung zur Trennung von Gemischen durch Pervaporation, mit zumindest einer Rohgemischkammer (1, 2), einer Permeatkammer (3, 4) und einer zwischen diesen angeordneten Membran (36, 36', 36''), die zur Trennung von Gemischen durch Pervaporation geeignet ist, sowie mit zumindest einem mit der Rohgemischkammer verbundenen Zufuhrkanal (22, 22') und zumindest einem mit der Rohgemischkammer verbundenen Abfuhrkanal (23, 23'), **dadurch gekennzeichnet,**
- daß die Vorrichtung Plattenpaare aufweist, wobei jede Platte (6, 6') eine Zufuhrseite und eine Membranseite hat, die Platten (6, 6') eines Plattenpaares einander ihre Zufuhrseite zuwenden, und zwischen ihnen die Zu- und Abfuhrkanäle (22, 23) der Rohgemischkammer angeordnet sind, die mit letzterer über Zu- und Abfuhrlochungen (16, 17) in den Platten (6, 6') verbunden sind,
- daß jede Platte (6, 6') auf der Membranseite umlaufende, erhabene Profile (5, 7, 5', 7') aufweist, wobei die Membran (36, 36') auf dem umlaufenden Profil (5, 5') gelagert ist, und vom Auflager der Membran (36, 36') zurückgesetzt eine umlaufende Dichtung (32, 32') in dichtem Eingriff zwischen Platte (6, 6') und Membran (36, 36') angeordnet ist,
- daß durch die Platten (6, 6') eines Plattenpaares, deren umlaufende Profile (5, 5') und die dazugehörigen Membranen (36, 36') die aus zwei miteinander verbundenen Flüssigkeitsteilkammern (8, 8') bestehende Rohgemischkammer (1) definiert ist, der die aktiven Trennschichten auf der Vorderseite der Membran zugewandt sind,
- daß die Permeatkammer (4) durch zwei jeweils auf der Rückseite der Membran (36', 36'') aufliegende perforierte Platten (40', 40''), die durch Abstandshalter (44') auf Abstand gehalten werden, gebildet wird und
- daß die Permeatkammer (4) an zwei Seiten vollständig offen und an den Seiten, an denen Zulauf und Ablauf erfolgt, teilweise offen ist.

2. Vorrichtung nach Anspruch 1, dadurch gekennzeichnet, daß jede der beiden Platten (6, 6') zumindest eine durchgehende Zufuhrbohrung (26) und zumindest eine durchgehende Abfuhrbohrung (27) aufweist, daß in der Zufuhrseite zumindest einer der beiden Platten (6, 6') zumindest eine Zufuhrausnehmung und zumindest eine Abfuhrausnehmung angebracht sind, die im zusammengesetzten Zustand der Platten (6, 6') dazwischen zumindest einen vertieften Zufuhrkanal (22) bzw. einen vertieften Abfuhrkanal (23) bilden,
daß zumindest eine Zufuhrlochung (16, 16') und zumindest eine Abfuhrlochung (17, 17') in jeder der Platten zusammen mit dem vertieften Zufuhrkanal bzw. mit dem vertieften Abfuhrkanal und der durchgehenden Zufuhrbohrung (26) bzw. der durchgehenden Abfuhrbohrung (27) den Zulauf bzw. den Ablauf bilden,
daß eine erste umlaufende Dichtung (10, 10') derart ausgebildet und in dichtendem Eingriff zwischen den Zufuhrseiten der Platten (6, 6') angeordnet ist, daß diese Dichtung (10, 10') die Zufuhrbohrung (26, 26'), die Zufuhrausnehmung und die Zufuhrlochung (16, 16') umfaßt, und
daß eine zweite umlaufende Dichtung (11, 11') derart ausgebildet und in dichtendem Eingriff zwischen den Zufuhrseiten der Platten (6, 6') angeordnet ist, daß diese Dichtung (11, 11') die Abfuhrbohrung (27, 27'), die Abfuhrausnehmung und die Abfuhrlochung (17, 17') umfaßt.

3. Vorrichtung nach Anspruch 1 oder 2, dadurch gekennzeichnet,
daß beide Platten (6, 6') im wesentlichen spiegelbildlich ausgebildet und zueinander angeordnet sind.

4. Vorrichtung nach einem der vorhergehenden Ansprüche, dadurch gekennzeichnet,
daß eine Mehrzahl von Rohgemischkammern (1, 2) und Permeatkammern (3, 4) abwechselnd als eine Stapeleinheit angeordnet ist, wobei jede Permeatkammer (4) von zwei Membranen (36', 36'') begrenzt wird.

5. Vorrichtung nach Anspruch 4, dadurch gekennzeichnet,
daß alle Rohgemischkammern (1, 2) derart miteinander zusammengebaut sind, daß jede Rohgemischkammer parallel zu der anderen betrieben werden kann.

6. Vorrichtung nach Anspruch 4 oder 5, dadurch gekennzeichnet,
daß alle Zufuhrbohrungen (26, 26', 26'') miteinander fluchten, daß alle Abfuhrbohrungen (27, 27', 27'') miteinander fluchten, daß zwischen den Membranseiten benachbarter Plattenpaare (6, 6' bzw. 6'') Ringdichtungen (46, 47; 46', 47') angeordnet sind, die die Zufuhrbohrungen (26, 26', 26'') bzw. die Abfuhrbohrungen (27, 27', 27'') so dichtend umgeben, daß zumindest ein gemeinsamer Zulauf und zumindest ein gemeinsamer Ablauf für alle Platten der Stapeleinheit entsteht.

7. Vorrichtung nach einem der vorhergehenden Ansprüche, dadurch gekennzeichnet,
daß eine periodische Anordnung von Rohgemischkammern (1, 2) und Permeatkammern (3, 4) durch eine Haltevorrichtung zusammengehalten wird, und daß sich die so zusammengehaltene Vorrichtung in einem evakuierbaren Gefäß befindet.

8. Vorrichtung nach Anspruch 7, dadurch gekennzeichnet,
daß die Haltevorrichtung aus Endflanschen und Zugbolzen besteht, die die Kammern zusammenhalten und mit diesen einen Modul bilden.

9. Vorrichtung nach Anspruch 8, dadurch gekennzeichnet,
daß mehrere derartiger Module gemeinsam in einem evakuierbaren Gefäß angeordnet sind,
daß die Zu- und Abläufe einzelner Module in Serie oder parallel geschaltet sind,
und daß Wärmetauscher in der Vorrichtung derart angeordnet und ausgebildet sind, daß das Rohgemisch zwischen zwei Modulen in einem Wärmetauscher aufgewärmt wird.

10. Vorrichtung nach Anspruch 9, dadurch gekennzeichnet,
daß jeweils ein Wärmetauscher in einem Endflansch eines Moduls integriert ausgebildet und angeordnet ist.

11. Vorrichtung nach einem der vorhergehenden Ansprüche, dadurch gekennzeichnet,
daß die Abstandhalter (44, 44') Netze oder Gitter aus Metall oder Kunststoff sind.

12. Vorrichtung nach einem der Ansprüche 1 bis 10, dadurch gekennzeichnet,
daß die perforierten Platten (40, 40', 40'') auf den einander zugewandten Flächen Profilierungen aufweisen, durch die definierte Kanäle für die Ableitung des Permeats gebildet werden.

13. Vorrichtung nach einem der vorhergehenden Ansprüche, dadurch gekennzeichnet,
daß die Platten (6, 6', 6'') aus Kunststoff oder geformten Metallblechen bestehen.

14. Vorrichtung nach einem der vorhergehenden Ansprüche, dadurch gekennzeichnet,
daß die ein Plattenpaar bildenden Platten (6, 6') durch Vernieten, Verschweißen, Verkleben oder Verklammern miteinander verbunden sind.

## Claims

1. Apparatus for separating mixtures by pervaporation with at least one raw-mixture chamber (1, 2), one permeate chamber (3, 4) and, disposed therebetween, a membrane (36, 36', 36'') suitable for separating mixtures by pervaporation as with at least one inflow channel (22, 22'), connected to the raw-mixture chamber, and at least one outflow channel (23, 23'), connected to the raw-mixture chamber, characterized in that
- the apparatus comprises pans of plates, wherein each plate (6, 6') has an inflow side and a membrane side; the plates (6, 6') of a pair of plates face one another with their inflow sides; and disposed therebetween are the inflow and outflow channels (22, 23) of the raw-mixture chamber, said inflow and outflow channels (22, 23) being connected to the latter by inflow and outflow holes (16, 17) in the plates (6, 6');
- each plate (6, 6') comprises, on the membrane side, allround-extending, raised profiled sections (5, 7, 5', 7'), wherein the membrane (36, 36') is supported on the allround-extending profiled section (5, 5'); and recessed from the support point of the membrane (36, 36') is an allround-extending seal (32, 32'), which is in tight engagement between plate (6, 6') and membrane (36, 36');
- the raw-mixture chamber (1), consisting of two interconnected liquid subchambers (8, 8'), is defined by the plates (6, 6') of a pair of plates, by their allround-extending profiled sections (5, 5') and by the associated membranes (36, 36'), wherein the active separation layers on the front of the membrane face said raw-mixture chamber (1);
- the permeate chamber (4) is formed by two perforated plates (40', 40''), said perforated plates (40', 40'') each resting on the back of the membrane (36', 36'') and being kept apart by spacers (44'); and
- the permeate chamber (4) is completely open on two sides and partially open on the sides on which inflow and outflow take place.

2. Apparatus according to claim 1, characterized in that each of the two plates (6, 6') comprises at least one continuous inflow bore (26) and at least one continuous outflow bore (27); in that the inflow side of at least one of the two plates (6, 6') is provided with at least one inflow recess and at least one outflow recess, wherein, with the plates (6, 6') in the assembled state, said inflow recess and outflow recess form between said plates (6, 6') at least one recessed inflow channel (22) and one recessed outflow channel (23), respectively;
in that the inflow and outflow, respectively, are formed by at least one inflow hole (16, 16') and at least one outflow hole (17, 17') in each of the plates in conjunction with the recessed inflow channel and the recessed outflow channel and in conjunction with the continuous inflow bore (26) and the continuous outflow bore (27);
in that a first allround-extending seal (10, 10') is of such design and is in such tight engagement between the inflow sides of the plates (6, 6') that said seal (10, 10') embraces the inflow bore (26, 26'), the inflow recess and the inflow hole (16, 16'); and
in that a second allround-extending seal (11,11') is of such design and is in such tight engagement between the inflow sides of the plates (6, 6') that said seal (11, 11') embraces the outflow bore (27, 27'), the outflow recess and the outflow hole (17, 17').

3. Apparatus according to claim 1 or 2, characterized in that both plates (6, 6') are basically mirror-inverted in design and with respect to one another.

4. Apparatus according to any one of the preceding claims, characterized in that
a plurality of raw-mixture chambers (1, 2) and permeate chambers (3, 4) is disposed alternately in the form of a stacked unit, with each permeate chamber (4) being bounded by two membranes (36', 36'').

5. Apparatus according to claim 4, characterized in that all raw-mixture chambers (1, 2) are interassembled in such a manner that each raw-mixture chamber can be operated in parallel with the other.

6. Apparatus according to claim 4 or 5, characterized in that all inflow bores (26, 26', 26'') align with one another;
in that all outflow bores (27, 27', 27'') align with one another;
in that annular seals (46, 47, 46', 47') are disposed between the membrane sides of adjacent pairs of plates (6, 6' and 6''), said annular seals (46, 47; 46', 47') sealingly surrounding the inflow bores (26, 26', 26'') and the outflow bores (27, 27', 27'') in such a manner that there is at least one common inflow and at least one common outflow for all the plates of the stacked unit.

7. Apparatus according to any one of the preceding claims, characterized in that
a periodic arrangement of raw-mixture chambers (1, 2) and permeate chambers (3, 4) is held together by a holding device, and in that the thus held-together apparatus is situated in an evacuatable vessel.

8. Apparatus according to claim 7, characterized in that the holding device consists of end flanges and tie bolts, said end flanges and tie bolts holding together the chambers and forming therewith a module.

9. Apparatus according to claim 8, characterized in that a plurality of such modules is jointly disposed in an evacuatable vessel;
in that the inflows and outflows of individual modules are connected in series or in parallel;
and in that heat exchangers are so disposed in the apparatus and so designed that the raw mixture between two modules is heated in a heat exchanger.

10. Apparatus according to claim 9, characterized in that a heat exchanger is integrated into and disposed in each end flange of a module.

11. Apparatus according to any one of the preceding claims, characterized in that
the spacers (44, 44') are nets or grates made of metal or plastic.

12. Apparatus according to any one of claims 1 to 10, characterized in that
on the facing surfaces, the perforated plates (40, 40', 40'') comprise profiled sections, with defined channels for the discharge of the permeate being formed by said profiled sections.

13. Apparatus according to any one of the preceding claims, characterized in that
the plates (6, 6', 6'') are made of plastic or of shaped metal sheets.

14. Apparatus according to any one of the preceding claims, characterized in that
the plates (6, 6') that form a pair of plates are joined together by riveting, welding, bonding or stapling.

## Revendications

1. Dispositif pour séparer des mélanges par pervaporation, comprenant au moins une chambre de mélange brut (1, 2), une chambre de perméat (3, 4) et une membrane (36, 36', 36'') disposée entre ces chambres et appropriée à la séparation de mélanges par pervaporation, et comprenant au moins un canal d'alimentation (22, 22') relié à la chambre de mélange brut et au moins un canal d'évacuation (23, 23') relie à la chambre de mélange brut, **caractérisé**
- en ce que le dispositif présente des paires de plaques, chaque plaque (6, 6') présentant un côté d'alimentation et un côté membrane, les plaques (6, 6') d'une paire de plaques Se faisant face par leur côte d'alimentation et les canaux d'alimentation et d'évacuation (22, 23) de la chambre de mélange brut étant disposés entre ces plaques et étant reliés a cette chambre par l'intermédiaire de perçages d'alimentation et d'évacuation (16, 17) dans les plaques (6, 6'),
- en ce que chaque plaque (6, 6') présente des profilés entourants en relief (5, 7, 5', 7') côte membrane, la membrane (36, 36') étant montée sur le profilé entourant (5, 5') et un joint d'étanchéité entourant (32, 32'), en retrait par rapport à l'appui de la membrane (36, 36'), étant disposé en engagement étanche entre la plaque (6, 6') et la membrane (36, 36'),
- en ce que la chambre de mélange brut (1), qui est constituée de deux chambres partielles de liquide (8, 8') mutuellement reliées et vers laquelle sont orientées les couches séparatrices actives sur le côté avant de la membrane, est définie par les plaques (6, 6') d'une paire de plaques, leurs profilés entourants (5, 5') et les membranes associées (36, 36'),
- en ce que la chambre de perméat (4) est formée par deux plaques perforées (40', 40''), qui reposent respectivement sur le côté arrière de la membrane (36', 36'') et sont maintenues à distance par des écarteurs (44'),
- et en ce que la chambre de perméat (4) est totalement ouverte sur deux côtés et partiellement ouverte sur les côtés sur lesquels s'effectuent l'alimentation et l'évacuation.

2. Dispositif selon la revendication 1, **caractérisé** en ce que chacune des deux plaques (6, 6') présente au moins un alésage traversant d'alimentation (26) et au moins un alésage traversant d'évacuation (27),
en ce qu'au moins un évidement d'alimentation et au moins un évidement d'évacuation sont pratiqués dans le côté d'alimentation d'au moins une des deux plaques (6, 6'), évidement qui, à l'état assemblé des plaques (6, 6'), forment entre elles au moins un canal d'alimentation creusé (22) ou, respectivement, un canal d'évacuation creusé (23),
en ce qu'au moins un perçage d'alimentation (16, 16') et au moins un perçage d'évacuation (17, 17') dans chacune des plaques forment conjointement l'admission ou, respectivement, l'évacuation conjointement avec le canal d'alimentation creusé ou le canal d'évacuation creusé et avec l'alésage traversant d'alimentation (26) ou l'alésage traversant d'évacuation (27), respectivement,
en ce qu'un premier joint d'étanchéité entourant (10, 10') est configuré, et disposé en engagement étanche entre les côtés d'alimentation des plaques (6, 6'), de telle sorte que ce joint d'étanchéité (10, 10') entoure l'alésage d'alimentation (26, 26'), l'évidement d'alimentation et le perçage d'alimentation (16, 16'),
et en ce qu'un second joint d'étanchéité entourant (11, 11') est configuré, et disposé en engagement étanche entre les côtés d'alimentation des plaques (6, 6'), de telle sorte que ce joint d'étanchéité (11, 11') entoure l'alésage d'évacuation (27, 27'), l'évidement d'évacuation et le perçage d'évacuation (17, 17').

3. Dispositif selon la revendication 1 ou 2, **caractérisé** en ce que les deux plaques (6, 6') sont réalisées sensiblement inversement symétriques et sont disposées en vis-à-vis.

4. Dispositif selon la revendication 1, **caractérisé** en ce qu'une pluralité de chambres de mélange brut (1, 2) et de chambres de perméat (3, 4) sont alternativement disposées sous la forme d'une unité d'empilement, chaque chambre de perméat (4) étant délimitée par deux membranes (36', 36'').

5. Dispositif selon la revendication 4, **caractérisé** en ce que toutes les chambres de mélange brut (1, 2) sont mutuellement assemblées de telle sorte que chaque chambre de mélange brut peut être exploitée en parallèle aux autres.

6. Dispositif selon la revendication 4 ou 5, **caractérisé** en ce que tous les alésages d'alimentation (26, 26', 26'') sont mutuellement alignés,
en Ce que tous les alésages d'évacuation (27, 27', 27'') sont mutuellement alignés,
et en ce que des joints d'étanchéité annulaires (46, 47 ; 46', 47') sont disposés entre les côtés membrane de paires de plaques voisines (6, 6' ou 6''), joints qui entourent les alésages d'alimentation (26, 26', 26'') ou, respectivement, les alésages d'évacuation (27, 27', 27'') de telle sorte qu'on obtient ou moins une alimentation commune et au moins une évacuation commune pour toutes les plaques de l'unité d'empilement.

7. Dispositif selon l'une quelconque des revendications précédentes, **caractérisé**
en ce qu'un agencement périodique de chambres de mélange brut (1, 2) et de chambres de perméat (3, 4) est maintenu assemblé par un dispositif de retenue,
et en ce que le dispositif ainsi maintenu assemblé se trouve dans un récipient pouvant être mis sous vide.

8. Dispositif selon la revendication 7, **caractérisé** en ce que le dispositif de retenue est constitué de flasques terminaux et de tirants, qui maintiennent les chambres assemblées et forment avec elles un module.

9. Dispositif selon la revendication 8, **caractérisé** en ce que plusieurs modules de ce type sont conjointement disposés dans un récipient pouvant être mis sous vide,
en ce que les alimentations et les évacuations dos différents modules sont relièes en série ou en parallèle,
et en ce que des échangeurs de chaleur sont disposés dans le dispositif et configurés de telle sorte que le mélange brut est réchauffé dans un échangeur de chaleur entre deux modules.

10. Dispositif selon la revendication 9, **caractérisé** en ce que chaque échangeur de chaleur est intégré dans un flasque terminal d'un module.

11. Dispositif selon l'une quelconque des revendications précédentes, **caractérisé**
en ce que les écarteurs (44, 44') sont dos grilles ou treillis en métal ou en matière plastique.

12. Dispositif selon l'une quelconque des revendications 1 à 10, **caractérisé**
en ce que les plaques perforées (40, 40', 40'') présentent, sur leurs faces en vis-à-vis, des profilages qui forment des canaux définis pour l'évacuation du perméat.

13. Dispositif selon l'une quelconque des revendications précédentes, **caractérisé**
en ce que les plaques (6, 6', 6'') sont réalisées en matière plastique ou en tôles métalliques façonnées.

14. Dispositif selon l'une quelconque des revendications précédentes, **caractérisé**
en ce que les plaques (6, 6') formant une paire de plaques sont mutuellement assemblées par rivetage, soudage, collage ou agrafage.
